# FASCICULE DE BREVET EUROPEEN

(11) **EP 2 869 985 B1**
(45) Date de publication et mention de la délivrance du brevet: **07.12.2016**
(21) Numéro de dépôt: 13747431.8
(22) Date de dépôt: 03.07.2013
(51) Int. Cl.: B29C 70/48, B23P 15/04, F01D 5/28, B29C 65/54, B29C 65/78

(54) **PROCÉDÉ DE FIXATION D'UN RENFORT MÉTALLIQUE STRUCTUREL SUR UNE PARTIE D'UNE AUBE DE TURBINE À GAZ EN MATÉRIAU COMPOSITE ET MOULE D'INJECTION POUR LA MISE EN OEUVRE D'UN TEL PROCÉDÉ**
VERFAHREN ZUM BEFESTIGEN EINER METALLSTRUKTURVERSTÄRKUNG AN EINEM TEIL EINER GASTURBINENSCHAUFEL UND SPRITZGIESSFORM ZUR DURCHFÜHRUNG SOLCH EINES VERFAHRENS
METHOD FOR FIXING A METAL STRUCTURAL REINFORCEMENT TO A PART OF A GAS TURBINE VANE CONSISTING OF A COMPOSITE MATERIAL, AND INJECTION MOULD FOR IMPLEMENTING SUCH A METHOD

(30) Priorité: 09.07.2012 FR 1256597
(43) Date de publication de la demande: 13.05.2015
(73) Titulaire: SNECMA, 75015 Paris (FR)
(72) Inventeur: GODON, Thierry, F-77550 Moissy-cramayel Cedex (FR); DAMBRINE, Bruno, Jacques, Gérard, F-77550 Moissy-cramayel Cedex (FR); VARIN, Franck, Bernard, Léon, F-77550 Moissy-cramayel Cedex (FR)
(74) Mandataire: Boura, Olivier
(86) Numéro de dépôt international: PCT/FR2013/051576
(87) Numéro de publication internationale: WO 2014/009635

(56) Documents cités:
- EP-A1- 1 777 063
- EP-A2- 2 353 830
- WO-A2-2011/006563
- US-A1- 2008 075 603
- US-A1- 2011 038 732

## Description

### Arrière-plan de l'invention

La présente invention se rapporte au domaine général des aubes de turbine à gaz pour moteurs aéronautiques qui sont réalisées en matériau composite et dont le bord d'attaque et/ou le bord de fuite est équipé d'un renfort structurel métallique.

Un domaine d'application de l'invention est celui des aubes de soufflante de turbomachine ou de pale d'hélice. Un autre domaine d'application de l'invention est celui des aubes directrices de sortie (ou OGV pour « Outlet Guide Vane ») de turbomachine.

Il est connu d'équiper les aubes de soufflante d'une turbomachine qui sont réalisées en matériau composite d'un renfort structurel métallique s'étendant sur toute la hauteur de l'aube et au-delà de leur bord d'attaque. Il en est de même pour les aubes directrices de sortie. Les documents US 2011/038732, EP 2 353 830 et EP 1 777 063 divulguent des méthodes de fixation d'un renfort métallique sur une aube de turbine à gaz.

De tels renforts structurels permettent de protéger l'aubage composite lors de l'impact sur la soufflante d'un corps étranger tel qu'un oiseau ingéré par la turbomachine par exemple. En particulier, les renforts structurels métalliques protègent le bord d'attaque (ou le bord de fuite) de l'aube en matériau composite en évitant les risques de délaminage, de rupture de fibre ou encore d'endommagement par une décohésion fibre/matrice.

Généralement, les renforts structurels sont des pièces en titane réalisées par fraisage à partir d'un bloc de matière et qui sont directement collés sur le profil extérieur de l'aube à protéger.

Le collage d'un renfort métallique structurel pose cependant plusieurs problèmes. Il est en particulier délicat d'obtenir une épaisseur de colle satisfaisante au niveau de toutes les surfaces de contact entre le renfort métallique et l'aube. Par ailleurs, avec la variabilité de la viscosité entre différents lots de colle, il est impossible de maîtriser l'épaisseur du joint de colle à iso conditions de fabrication.

Il existe donc un besoin de pouvoir disposer d'un procédé permettant de s'assurer de la reproductibilité du collage du renfort métallique structurel sur l'aube, notamment en termes de maîtrise de l'épaisseur du joint de colle.

### Objet et résumé de l'invention

Conformément à l'invention, ce but est atteint grâce à un procédé de fixation d'un renfort métallique structurel sur une partie d'une aube de turbine à gaz en matériau composite ayant un renfort fibreux densifié par une matrice, comprenant le positionnement du renfort métallique structurel dans un moule d'injection, le positionnement dans le moule d'injection de la partie de l'aube sur laquelle doit être fixée le renfort métallique structurel, la partie de l'aube et le renfort métallique structurel étant positionnés l'un par rapport à l'autre dans leur positionnement final et en laissant un interstice entre eux, l'injection de colle dans l'interstice entre le renfort métallique structurel et la partie de l'aube sur laquelle doit être fixée le renfort métallique structurel, et la polymérisation de la colle.

Le procédé de fixation selon l'invention présente l'avantage de se baser sur un procédé de remplissage de résine par voie liquide de type LCM (pour « Liquid Composite Molding »), plus particulièrement d'un procédé d'injection de résine sous vide de type RTM (pour « Resin Transfer Molding ») ou sous vide de type VARTM (pour « Vaccum Assisted Resin Transfer Molding ») pour assurer un collage du renfort métallique structurel sur l'aube. Un tel procédé est bien connu en soi, ce qui permet d'assurer une parfaite maîtrise du procédé de fixation du renfort métallique structurel. Avec ce procédé, il est en particulier possible de parfaitement maîtriser l'épaisseur finale du joint de colle en tout point de la surface de contact entre le renfort métallique et l'aube. Il en résulte la possibilité de reproduire aisément le collage des renforts métalliques sur les aubes de turbine à gaz.

Le positionnement de l'aube dans le moule d'injection peut se faire horizontalement ou verticalement. De même, l'aube peut être partiellement ou entièrement positionnée dans le moule d'injection. De la sorte, le procédé selon l'invention possède de grandes libertés d'utilisation.

De préférence, le procédé comprend en outre l'établissement du vide dans l'interstice entre le renfort métallique structurel et la partie de l'aube sur laquelle doit être fixée le renfort métallique structurel préalablement à l'injection de colle. L'établissement du vide permet d'assurer une répartition parfaitement homogène de la colle dans l'interstice.

De préférence encore, le renfort métallique structurel est maintenu à l'intérieur du moule d'injection par l'intermédiaire d'une mise sous vide ou par effet ventouse. Ainsi, il est possible de disposer d'un moule d'injection en deux parties articulées l'une par rapport à l'autre, chaque partie du moule recevant un flanc latéral du renfort métallique structurel.

L'invention a également pour objet l'utilisation du procédé tel que défini précédemment pour la fixation d'un renfort métallique structurel sur le bord d'attaque, le bord de fuite ou le sommet d'une aube de soufflante, d'une pale d'hélice ou d'une aube directrice de sortie en matériau composite pour turbomachine.

L'invention a encore pour objet un moule d'injection pour la mise en oeuvre du procédé tel que défini précédemment, le moule comprenant un emplacement pour recevoir un renfort métallique structurel destiné à être fixé sur une partie de l'aube, et des moyens pour assurer un maintien du renfort métallique structurel dans le moule. Le moule peut comprendre deux parties articulées l'une à l'autre par une charnière.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique d'une section d'aube de soufflante de turbomachine en matériau composite dont le bord d'attaque est recouvert d'un renfort métallique structurel ;
- les figures 2 à 5 montrent différentes étapes du procédé conforme à l'invention pour fixer le renfort métallique structurel sur le bord d'attaque de l'aube de la figure 1 ;
- la figure 6 est une schématique d'une section d'aube de redresseur structural en matériau composite dont le bord d'attaque est recouvert d'un renfort métallique structurel ; et
- la figure 7 montre une étape du procédé conforme à l'invention pour fixer le renfort métallique structurel sur le bord d'attaque de l'aube de la figure 6.

### Description détaillée de l'invention

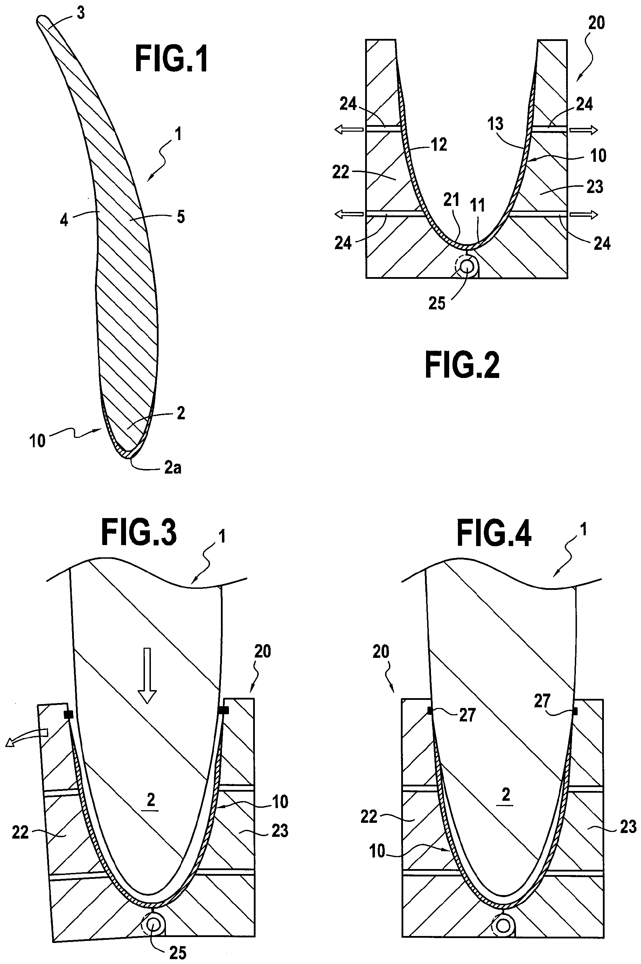

L'invention s'applique à toute aube de turbine à gaz en matériau composite pour moteur aéronautique, et en particulier aux aubes de soufflante de turbomachine telle que celle représentée en section sur la figure 1.

De façon connue en soi, l'aube de soufflante 1 présente une surface aérodynamique qui s'étend notamment entre un bord d'attaque 2 et un bord de fuite 3. La surface aérodynamique de l'aube de soufflante comprend également une face intrados 4 et une face extrados 5 qui forment les faces latérales de l'aube reliant le bord d'attaque au bord de fuite.

L'aube de soufflante 1 est réalisée en matériau composite avec un renfort fibreux densifié par une matrice. Par exemple, l'aube pourra être réalisée par tissage tridimensionnel d'une préforme fibreuse et imprégnation de la préforme par une matrice, l'ensemble étant formé par moulage au moyen d'un procédé d'injection de résine sous vide de type VARTM.

L'aube de soufflante 1 comporte un renfort métallique structurel 10 qui est collé au niveau de son bord d'attaque 2 et qui s'étend à la fois axialement au-delà du bord d'attaque de l'aube et radialement sur toute la hauteur du bord d'attaque (c'est-à-dire depuis le pied jusqu'au sommet de l'aube - non représentés sur la figure 1).

Plus précisément, le renfort métallique structurel 10 épouse la forme du bord d'attaque 2 de l'aube qu'il prolonge pour former un bord d'attaque métallique 2a. Au-delà du bord d'attaque de l'aube, le renfort métallique structurel épouse partiellement le profil des faces intrados 4 et extrados 5 de l'aube.

Le renfort métallique structurel 10 présente une section droite sensiblement en forme de V arrondi avec une base 11 épousant le bord d'attaque 2 de l'aube et prolongée par deux flancs latéraux 12, 13 épousant respectivement la face intrados 4 et la face extrados 5 de l'aube. Les flancs latéraux 12, 13 du renfort métallique structurel présentent un profil aminci en direction du bord de fuite de l'aube.

Le renfort métallique structurel 10 est une pièce monobloc réalisée de préférence à base de titane. Ce matériau présente en effet une grande capacité d'absorption de l'énergie due aux chocs.

Il est à noter qu'un renfort métallique structurel pourrait être fixé de la même manière au niveau du bord de fuite de l'aube ou en sommet d'aube, en remplacement ou en complément du renfort métallique structure fixé sur le bord d'attaque.

Le renfort métallique structurel 10 est fixé sur le bord d'attaque 2 de l'aube de soufflante 1 au moyen d'un procédé de fixation selon l'invention qui est décrit ci-après en liaison avec les figures 2 à 5.

Dans un premier temps, le renfort métallique structurel 10 à fixer sur le bord d'attaque de l'aube de soufflante est positionné à l'intérieur d'un moule d'injection 20.

Comme représenté sur la figure 2, le moule d'injection 20 présente une surface interne dont le profil correspond sensiblement au profil externe du renfort métallique structurel 10 avec notamment un fond 21 recevant la base 11 du renfort métallique structurel et deux bords 22, 23 recevant respectivement les flancs latéraux 12, 13 du renfort.

Dans l'exemple illustré sur les figures 2 à 5, le renfort métallique structurel 10 est maintenu à l'intérieur du moule d'injection 20 par l'intermédiaire d'une mise sous vide. A cet effet, les bords 22, 23 du moule d'injection présentent des canaux 24 destinés à faire le vide entre la surface interne du moule d'injection et la surface externe du renfort métallique structurel de façon à assurer un maintien de celui-ci à l'intérieur du moule d'injection.

Bien entendu, d'autres moyens pour assurer un tel maintien pourraient être envisagés. Par exemple, la surface interne du moule d'injection pourrait être munie de ventouses sur lesquelles serait plaqué le renfort métallique structurel.

Par ailleurs, dans le mode de réalisation décrit ici, le moule d'injection est réalisé en deux parties articulées l'une à l'autre par une charnière 25. En particulier, les deux parties articulées correspondent aux deux bords 22, 23 du moule d'injection. Bien entendu, tout autre type de fermeture du moule d'injection peut être envisagé.

Une fois le renfort métallique structurel 10 correctement positionné et maintenu à l'intérieur du moule d'injection, on procède au positionnement du bord d'attaque de l'aube de soufflante destiné à être recouvert. A cet effet, comme représenté sur la figure 3, le moule d'injection 10 est ouvert (en écartant les bords 22, 23) pour permettre l'introduction du bord d'attaque 2 de l'aube à l'intérieur du moule d'injection.

Le bord d'attaque 2 de l'aube est maintenu dans cette position par encastrement de l'aube dans une partie fixe d'un outillage par l'intermédiaire de son pied et/ou de son bord de fuite par exemple. Le moule d'injection 10 peut alors être refermé en plaçant ses bords 22, 23 dans leur position initiale.

Dans cette position (figure 4), le bord d'attaque 2 de l'aube et le renfort métallique structurel sont maintenus l'un par rapport à l'autre dans leur positionnement final, c'est-à-dire en laissant subsister entre eux un interstice 26 calibré en fonction de la quantité de colle que l'on souhaite injecter.

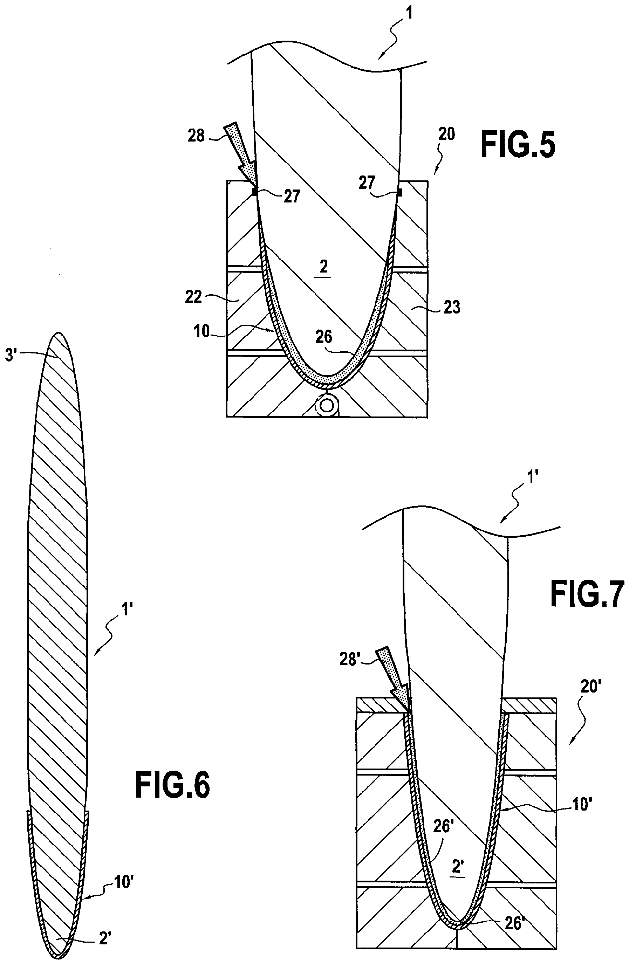

L'étape suivante du procédé illustrée par la figure 5 consiste à injecter de la colle dans l'interstice 26 créé entre le renfort métallique structurel 10 et le bord d'attaque 2 de l'aube. A cet effet, un joint d'étanchéité 27 est positionné sur le moule d'injection autour de l'extrémité des deux flancs latéraux 12, 13 du renfort métallique structurel et l'injection de colle peut être effectuée en tout point périphérique du bord d'attaque de l'aube (ce point d'injection de colle est schématisé par la flèche 28 sur la figure 5). La colle vient remplir tout l'espace de l'interstice 26.

De préférence, l'injection de colle est réalisée après avoir effectué au préalable le vide au niveau de l'interstice 26 entre le renfort métallique structurel 10 et le bord d'attaque 2 de l'aube afin d'assurer une répartition parfaitement homogène de la colle.

Pour ce faire, on pourra effectuer une aspiration de l'air dans l'interstice en tout point périphérique du bord d'attaque de l'aube (qui soit distinct du point d'injection de colle 28). Il convient de noter que le niveau de vide à l'intérieur de l'interstice ne doit pas interrompre le maintien du renfort métallique structurel à l'intérieur du moule d'injection. En particulier, ce vide d'air doit être réalisé en gardant un gradient de pression entre l'interstice et l'espace délimité entre le moule d'injection et le renfort métallique structurel qui soit suffisant pour éviter que le renfort métallique structurel ne se décolle du moule d'injection.

La colle qui est injectée dans l'interstice 26 entre le renfort métallique structurel 10 et le bord d'attaque 2 de l'aube peut être un polymère de type polyester, polyuréthane, polyépoxyde, bismaléimide et/ou phénolique et se présenter sous la forme d'une pâte.

Cette colle est ensuite polymérisée. Par exemple, dans le cas d'une colle de type époxyde de classe 180°C, sa polymérisation sera réalisée par une élévation de température à 140°C pendant 2 heures après son injection.

Ensuite, le bord d'attaque de l'aube peut être démoulé du moule d'injection. A cet effet, il pourra être utile d'ouvrir à nouveau le moule d'injection en écartant ses bords 22, 23 l'un de l'autre comme décrit en liaison avec la figure 3.

En liaison avec les figures 6 et 7, on décrira maintenant un autre exemple de mise en oeuvre du procédé selon l'invention.

Dans cet exemple, l'aube à munir d'un renfort métallique structurel est une aube directrice de sortie pour turbomachine, également appelée OGV (pour « Outlet Guide Vane »).

Comme représenté sur la figure 6, l'aube directrice de sortie 1' présente une surface aérodynamique qui s'étend notamment entre un bord d'attaque 2' et un bord de fuite 3'.

Comme pour l'aube de soufflante précédemment décrite, l'aube directrice de sortie 1' est réalisée en matériau composite et présente un renfort métallique structurel 10' qui est collé au niveau de son bord d'attaque 2' et qui s'étend à la fois axialement au-delà du bord d'attaque de l'aube et radialement sur toute la hauteur du bord d'attaque.

Le procédé de fixation du renfort métallique structurel 10' sur le bord d'attaque 2' de l'aube 1' est identique à celui décrit précédemment. En particulier, il consiste principalement à positionner le renfort métallique structurel 10' dans un moule d'injection 20', puis à positionner le bord d'attaque 2' de l'aube dans le moule d'injection de sorte que celui-ci et le renfort métallique structurel soient positionnés l'un par rapport à l'autre dans leur positionnement final et en ménageant entre eux un interstice 26'. La colle peut alors être injectée par un point d'injection de colle 28' placé en périphérie du bord d'attaque de l'aube. Après polymérisation de la colle, l'aube et son bord d'attaque peuvent être démoulés du moule d'injection.

Par rapport au mode de réalisation décrit en liaison avec l'aube de soufflante, le moule d'injection utilisé ici n'est pas nécessairement réalisé en deux parties articulées l'une par rapport à l'autre. En effet, compte tenu de la forme non cambrée de l'aube directrice de sortie, il n'est pas indispensable d'avoir à ouvrir le moule d'injection pour y positionner le bord d'attaque de l'aube.

On décrira maintenant des caractéristiques communes aux deux modes de réalisation précédemment décrits.

L'aube (de soufflante ou directrice de sortie) peut être positionnée dans le moule d'injection verticalement ou horizontalement selon les besoins. Elle peut par ailleurs être partiellement ou totalement positionnée à l'intérieur du moule d'injection.

L'injection de colle dans l'interstice ménagé entre le renfort métallique structurel et le bord d'attaque de l'aube peut se faire en périphérie du bord d'attaque comme illustré sur les figures ou au niveau de l'une ou des deux extrémités radiales du renfort métallique structurel. Il est également possible d'envisager que l'injection de colle se fasse par un ou plusieurs trous percés dans la base du renfort métallique structurel, ces trous étant ensuite rebouchés (par exemple par recharge laser).

De plus, au cours de l'étape d'injection de la colle dans le moule d'injection, il est possible de réaliser un collage d'un film de polyuréthane sur les faces intrados et/ou extrados de l'aube. Un tel film a pour fonction de protéger la face recouverte de l'aube contre l'érosion.

Dans les exemples décrits, il a été envisagé de positionner un renfort métallique structurel sur le bord d'attaque d'une aube. Bien entendu, le même procédé pourra pareillement s'appliquer à la fixation d'un renfort métallique structurel sur le bord de fuite ou le sommet de l'aube. En particulier, en cas de nécessité de fixer de tels renforts à la fois sur le bord d'attaque et le bord de fuite de l'aube, ces opérations pourront être réalisées de façon concomitante en utilisant le même procédé d'injection. De même, le procédé selon l'invention s'applique aussi bien aux pales d'hélice d'un moteur d'avion de type turbopropulseur.

## Revendications

1. Procédé de fixation d'un renfort métallique structurel (10 ; 10') sur une partie (2 ; 2') d'une aube (1 ; 1') de turbine à gaz en matériau composite ayant un renfort fibreux densifié par une matrice, comprenant :
le positionnement du renfort métallique structurel dans un moule d'injection (20 ; 20') ;
le positionnement dans le moule d'injection de la partie de l'aube sur laquelle doit être fixée le renfort métallique structurel, la partie de l'aube et le renfort métallique structurel étant positionnés l'un par rapport à l'autre dans leur positionnement final et en laissant un interstice (26 ; 26') entre eux ;
l'injection de colle dans l'interstice entre le renfort métallique structurel et la partie de l'aube sur laquelle doit être fixée le renfort métallique structurel ; et
la polymérisation de la colle.

2. Procédé selon la revendication 1, comprenant en outre l'établissement du vide dans l'interstice entre le renfort métallique structurel et la partie de l'aube sur laquelle doit être fixée le renfort métallique structurel préalablement à l'injection de colle.

3. Procédé selon l'une des revendications 1 et 2, dans lequel le renfort métallique structurel est maintenu à l'intérieur du moule d'injection par l'intermédiaire d'une mise sous vide ou par effet ventouse.

4. Procédé selon l'une quelconque des revendications 1 à 3, dans lequel la colle est un polymère.

5. Utilisation du procédé selon l'une quelconque des revendications 1 à 4 pour la fixation d'un renfort métallique structurel (10 ; 10') sur le bord d'attaque (2 ; 2'), le bord de fuite (3 ; 3') ou le sommet d'une aube de soufflante (1), d'une pale d'hélice ou d'une aube directrice de sortie (1') en matériau composite pour turbomachine.

6. Moule d'injection (20 ; 20') pour la mise en oeuvre du procédé selon l'une quelconque des revendications 1 à 4, comprenant un emplacement pour recevoir un renfort métallique structurel destiné à être fixé sur une partie de l'aube, et des moyens (24) pour assurer un maintien du renfort métallique structurel dans le moule.

7. Moule selon la revendication 6, comprenant deux parties (22, 23) articulées l'une à l'autre par une charnière.

## Patentansprüche

1. Verfahren zur Befestigung einer metallischen Strukturverstärkung (10; 10') an einem Teil (2; 2') einer Schaufel (1; 1') einer Gasturbine aus Verbundwerkstoff mit einer durch eine Matrix verdichteten Faserverstärkung, umfassend:
das Positionieren der metallischen Strukturverstärkung in einer Spritzgussform (20; 20'),
das Positionieren des Teils der Schaufel, an dem die metallische Strukturverstärkung befestigt werden soll, in der Spritzgussform, wobei der Teil der Schaufel und die metallische Strukturverstärkung in ihrer endgültigen Stellung und unter Lassen eines Zwischenraums (26; 26') zwischen ihnen zueinander positioniert werden,
das Einspritzen von Kleber in den Zwischenraum zwischen der metallischen Strukturverstärkung und dem Teil der Schaufel, an dem die metallische Strukturverstärkung befestigt werden soll, und
die Polymerisation des Klebers.

2. Verfahren nach Anspruch 1, ferner umfassend das Herstellen eines Vakuums in dem Zwischenraum zwischen der metallischen Strukturverstärkung und dem Teil der Schaufel, an dem die metallische Strukturverstärkung befestigt werden soll, vor dem Einspritzen des Klebers.

3. Verfahren nach einem der Ansprüche 1 und 2, bei dem die metallische Strukturverstärkung innerhalb der Spritzgussform mittels eines Evakuierens oder durch Saugwirkung gehalten wird.

4. Verfahren nach einem der Ansprüche 1 bis 3, bei dem der Kleber ein Polymer ist.

5. Verwendung des Verfahrens nach einem der Ansprüche 1 bis 4, für die Befestigung einer metallischen Strukturverstärkung (10; 10') an der Eintrittskante (2; 2'), der Austrittskante (3; 3') oder der Spitze einer Gebläseschaufel (1), eines Propellerblattes oder einer Austrittsleitschaufel (1') aus Verbundwerkstoff für eine Turbomaschine.

6. Spritzgussform (20; 20') für die Durchführung des Verfahrens nach einem der Ansprüche 1 bis 4, umfassend eine Stelle für die Aufnahme einer metallischen Strukturverstärkung, die dazu bestimmt ist, an einem Teil der Schaufel befestigt zu werden, sowie Mittel (24) zum Sicherstellen eines Haltens der metallischen Strukturverstärkung in der Form.

7. Form nach Anspruch 6, umfassend zwei Teile (22, 23), die durch ein Scharnier zueinander angelenkt sind.

## Claims

1. A method of fastening structural metal reinforcement (10; 10') on a portion (2; 2') of a gas turbine blade (1; 1') made of composite material having fiber reinforcement densified by a matrix, the method comprising:
positioning the structural metal reinforcement in an injection mold (20; 20');
positioning the portion of the blade onto which the structural metal reinforcement is to be fastened in the injection mold, the portion of the blade and the structural metal reinforcement being positioned relative to each other in their final relative position while leaving between them a gap (26; 26');
injecting adhesive into the gap between the structural metal reinforcement and the portion of the blade onto which the structural metal reinforcement is to be fastened; and
polymerizing the adhesive.

2. A method according to claim 1, further comprising establishing a vacuum in the gap between the structural metal reinforcement and the portion of the blade on which the structural metal reinforcement is to be fastened prior to injecting the adhesive.

3. A method according to claim 1 or claim 2, wherein the structural metal reinforcement is held inside the injection mold by a vacuum or by a suction cup effect.

4. A method according to any one of claims 1 to 3, wherein the adhesive is a polymer.

5. The use of the method according to any one of claims 1 to 4 for fastening structural metal reinforcement (10; 10') on the leading edge (2; 2'), the trailing edge (3; 3'), or the tip of a fan blade (1), of a propeller blade, or of an outlet guide vane (1') made of composite material and for use in a turbine engine.

6. An injection mold (20; 20') for performing the method according to any one of claims 1 to 4, including a location for receiving structural metal reinforcement that is to be fastened on a portion of the blade, and means (24) for holding the structural metal reinforcement in the mold.

7. A mold according to claim 6, comprising two portions (22, 23) that are hinged together by a hinge.
